# EUROPEAN PATENT APPLICATION

(11) **EP 4 815 134 A1**
(43) Date of publication of application: **30.09.2026**
(21) Application number: 26154575.0
(22) Date of filing: 27.01.2026
(51) Int. Cl.: H01M 50/209, H01M 50/503, H01M 50/507, H01M 50/55, H01M 50/553

(54) **BATTERY MODULE**

(30) Priority: 25.03.2025 KR 20250038246
(71) Applicant: SAMSUNG SDI CO., LTD., Yongin-si, Gyeonggi-do 17084 (KR)
(72) Inventor: JEONG, Areum, 17084 YONGIN-SI (KR); KIM, Hyun, 17084 YONGIN-SI (KR)
(74) Representative: Regimbeau

(57) **Abstract**

A battery module includes battery cells and a bus bar for connecting some of the battery cells in parallel to form parallel modules, and connecting in series the parallel modules differing from each other. The bus bar includes a first sub-bus bar for electrically connecting a first battery cell of the battery cells and a second battery cell of the battery cells, and a second sub-bus bar for electrically connecting a third battery cell of the battery cells and a fourth battery cell of the battery cells. A bus bar overlapping portion is formed where the first sub-bus bar overlaps and connects to the second sub-bus bar. The thickness of the bus bar overlapping portion is thicker than the thickness of the first sub-bus bar, and the thickness of the bus bar overlapping portion is thicker than the thickness of the second sub-bus bar.

## Description

### TECHNICAL FIELD

The present disclosure relates to a battery module.

### TECHNICAL BACKGROUND

In general, rechargeable batteries may be applied as battery cells connected in series and/or in parallel to form a battery module that provides high energy density (e.g., for driving a motor of a vehicle). The battery module is configured by electrically connecting the electrode terminals of battery cells to each other using an electrical connecting member (e.g., bus bar) so as to match the required amount of electric power, for example, to implement a high-power rechargeable battery for an electric vehicle.

Temperature management of the battery cell and also the electrical connecting member plays an important role in the efficiency and stability of the battery module. Accordingly, there is a need for components of the battery module, including the electrical connecting member, to be equipped so as not to be overheated during an operation of the battery module.

The information in this section is only intended to improve understanding of the background of the present disclosure and include information that does not constitute related or prior art.

### SUMMARY

The present disclosure provides a battery module for controlling an increase of temperature of a bus bar that electrically connects battery cells in a battery module, according to the appended claims. But the technical objects of the present disclosure are not limited, and the technical objects other than those expressly described herein will be clearly comprehended by a person of ordinary skill in the art.

An embodiment of the present disclosure provides a battery module including battery cells, and a bus bar for connecting some of the battery cells in parallel, and connecting in series some of the battery cells connected in parallel, wherein the bus bar includes a first sub-bus bar for electrically connecting a first battery cell of the battery cells and a second battery cell of the battery cells, a second sub-bus bar for electrically connecting a third battery cell of the battery cells and a fourth battery cell of the battery cells, with a bus bar overlapping portion being formed where the first sub-bus bar overlaps and connects to the second sub-bus bar, the thickness of the bus bar overlapping portion is thicker than the thickness of the first sub-bus bar, and the thickness of the bus bar overlapping portion is thicker than the thickness of the second sub-bus bar.

The bus bar overlapping portion may be twice as thick as the first sub-bus bar, and the bus bar overlapping portion is twice as thick as the second sub-bus bar.

The first sub-bus bar may include a first sub-connector extending in a direction in which the battery cells are arranged, and a first sub-first branch and a first sub-second branch extending from opposite ends of the first sub-connector, the first sub-first branch may be electrically connected to a first electrode terminal of one of the first and second battery cells, and the first sub-second branch may be electrically connected to a second electrode terminal of the other of the first and second battery cells.

The second sub-bus bar may include a second sub-connector extending in the direction in which the battery cells are arranged, and a second sub-first branch and a second sub-second branch extending from opposite ends of the second sub-connector, the second sub-first branch may be electrically connected to a first electrode terminal of one of the third and fourth battery cells, and the second sub-second branch may be electrically connected to a second electrode terminal of the other of the third and fourth battery cells.

Three battery cells may be arranged between the first sub-first branch and the first sub-second branch, and three battery cells may be arranged between the second sub-first branch and the second sub-second branch.

The battery module may further include a first outer terminal, a first terminal access member for electrically connecting the first outer terminal to a fifth battery cell of the battery cells and a sixth battery cell of the battery cells, and a second terminal access member for electrically connecting the first outer terminal to a seventh battery cell of the battery cells and an eighth battery cell of the battery cells.

The first terminal access member may include a first-1 sub-access member for electrically connecting a first electrode terminal of one of the fifth and sixth battery cells and the first outer terminal, a first-2 sub-access member for electrically connecting a first electrode terminal of the other of the fifth and sixth battery cells and the first outer terminal, wherein a first terminal access overlapping portion is formed where the first-1 sub-access member overlaps and connects to the first-2 sub-access member, and the thickness of the first terminal access overlapping portion is greater than the thickness of the first-1 sub-access member, and the thickness of the first terminal access overlapping portion is greater than the thickness of the first-2 sub-access member.

The first terminal access overlapping portion may be twice as thick as the first-1 sub-access member, and the first terminal access overlapping portion is twice as thick as the first-2 sub-access member.

The second terminal access member may include a second-1 sub-access member for electrically connecting a first electrode terminal of one of the seventh and eighth battery cells and the first outer terminal, a second-2 sub-access member for electrically connect a first electrode terminal of the other of the seventh and eighth battery cells and the first outer terminal, wherein a second terminal access overlapping portion is formed where the second-1 sub-access member overlaps and connects to the second-2 sub-access member, the thickness of the second terminal access overlapping portion is greater than the thickness of the second-1 sub-access member, and the thickness of the second terminal access overlapping portion is greater than the thickness of the second-2 sub-access member.

The second terminal access overlapping portion may be twice as thick as the second-1 sub-access member, and second terminal access overlapping portion is twice as thick as the second-2 sub-access member.

The battery module may further include a second outer terminal, a third terminal access member for electrically connecting the second outer terminal to a ninth battery cell of the battery cells and a tenth battery cell of the battery cells, and a fourth terminal access member for electrically connecting the second outer terminal to an eleventh battery cell of the battery cells and a twelfth battery cell of the battery cells.

The third terminal access member may include a third-1 sub-access member for electrically connecting a second electrode terminal of one of the ninth and tenth battery cells and the second outer terminal, a third-2 sub-access member for electrically connecting a second electrode terminal of the other of the ninth and tenth battery cells and the second outer terminal, wherein a third terminal access overlapping portion is formed where the third-1 sub-access member overlaps and connects to the third-2 sub-access member, and the thickness of the third terminal access overlapping portion is greater than the thickness of the third-1 sub-access member, and the thickness of the third terminal access overlapping portion is greater than the thickness of the third-2 sub-access member.

The third terminal access overlapping portion may be twice as thick as the third-1 sub-access member, and the third terminal access overlapping portion is twice as thick as the third-2 sub-access member.

The fourth terminal access member may include, a fourth-1 sub-access member for electrically connecting a second electrode terminal of one of the eleventh and twelfth battery cells and the second outer terminal, a fourth-2 sub-access member for electrically connecting a second electrode terminal of the other of the eleventh and twelfth battery cells and the second outer terminal, a fourth terminal access overlapping portion is formed where the fourth-1 sub-access member overlaps and connects to the fourth-2 sub-access member, the thickness of the fourth terminal access overlapping portion may be greater than the thickness of the fourth-1 sub-access member, and the thickness of the fourth terminal access overlapping portion may be greater than the thickness of the fourth-2 sub-access member.

The fourth terminal access overlapping portion may be twice as thick as the fourth-1 sub-access member, and the fourth terminal access overlapping portion may be twice as thick as fourth-2 sub-access member.

The battery cells may be prismatic battery cells.

The bus bar according to the embodiments of the present disclosure may include a portion in which the current is focused by overlapping sub-bus bars, with the portion having an increased cross-sectional thickness as compared to other parts of the bus bar. Accordingly, the bus bar may not have increased temperature in the portion where the current is concentrated, and the battery module employing the bus bar may have improved characteristics.

### BRIEF DESCRIPTION OF THE DRAWINGS

The drawings illustrate embodiments of the present disclosure to be understood easily together with detailed descriptions of the present disclosure. But the present disclosure is not limited to the embodiments illustrated in the accompanying drawings.
FIG. 1 is a perspective view on a battery module according to an embodiment of the present disclosure.
FIG. 2 is a top view on a battery module of FIG. 1.
FIG. 3 is a perspective view on a bus bar according to an embodiment of the present disclosure.
FIG. 4 is a perspective view on a first terminal access member according to an embodiment of the present disclosure.
FIG. 5 is a perspective view on a second terminal access member according to an embodiment of the present disclosure.
FIG. 6 is a perspective view on a third terminal access member according to an embodiment of the present disclosure.
FIG. 7 is a perspective view on a fourth terminal access member according to an embodiment of the present disclosure.
FIG. 8 to FIG. 10 show changes of temperatures of a battery module according to an embodiment of the present disclosure and a battery module according to a comparative example.

### DETAILED DESCRIPTION OF THE EMBODIMENTS

Embodiments disclosed in the present specification will be described in detail with reference to the accompanying drawings. In the present specification, the same or similar components will be denoted by the same or similar reference numerals, and an overlapped description thereof will be omitted. As those skilled in the art would realize, the described embodiments may be modified in various different ways, all without departing from the spirit or scope of the present disclosure.

The size and thickness of components shown in the drawings are arbitrarily shown for better understanding and ease of description, but the present disclosure is not limited thereto. For example, in the drawings, the thickness of layers, films, plates, regions, etc., may be enlarged for clarity. The thicknesses of some layers and areas are exaggerated for convenience of explanation.

It will be understood that if an element such as a layer, film, region, or substrate is referred to as being "on" another element, it may be directly on the another element or intervening elements may also be present. In contrast, if an element is referred to as being "directly on" another element, there are no intervening elements present. The word "on" or "above" means disposed on or below the object portion, and does not necessarily mean disposed "on" or "above" the upper side of the object portion based on a gravitational direction.

Unless explicitly described to the contrary, the word "comprise", and variations such as "comprises" or "comprising", will be understood to imply the inclusion of stated elements but not the exclusion of any other elements.

The phrase "on a plane" means viewing the object portion from the top, and the phrase "on a cross-section" means viewing a cross-section of the object portion which is vertically cut from the side.

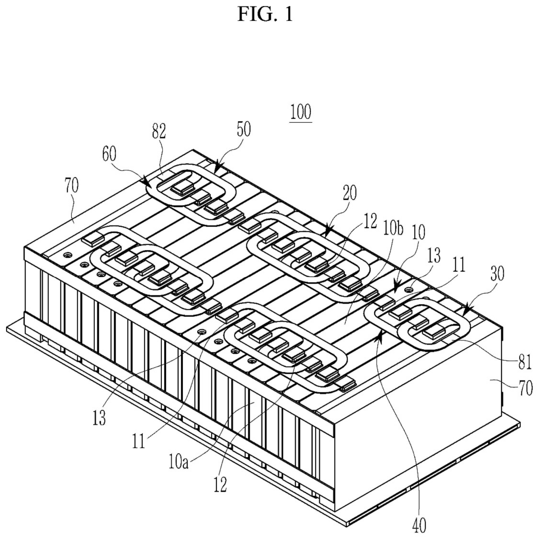

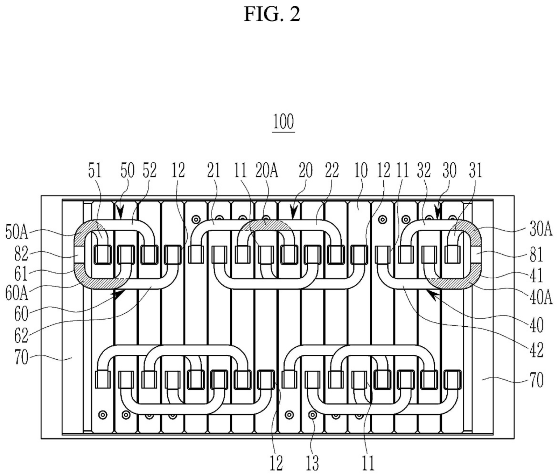

FIG. 1 is a perspective view on a battery module according to an embodiment of the present disclosure, and FIG. 2 is a top view on a battery module of FIG. 1.

Referring to FIG. 1 and FIG. 2, the battery module 100 may include battery cells 10 and bus bars 20 for electrically connecting the battery cells 10. The battery module 100 may include end plates 70 arranged at respective ends of the battery module 100 in a direction in which the battery cells 10 are arranged.

Each of the battery cells 10 may include a negative electrode terminal 11, a positive electrode terminal 12 and an electrolyte inlet 13. Each of the battery cells 10 may also include an electrode assembly, a case 10a having a space for receiving the electrode assembly and the electrolyte, and a cap plate 10b for sealing the internal space together with the case. The negative electrode terminal 11, the positive electrode terminal 12, and the electrolyte inlet 13 may be disposed on the cap plate. For example, the battery cells 10 may be prismatic battery cells.

The battery cells 10 may be arranged in one direction, and pairs of the battery cells 10 coupled in parallel may configure sub-modules (or parallel modules). The parallel modules that are different from each other may be coupled in series. Four neighboring battery cells 10 may be arranged so that adjacent electrode terminals may have the same polarity.

Each of the bus bars 20 may connect two of the battery cells 10 in parallel, and may connect the different parallel modules in series. Each of the bus bars 20 may include a first sub-bus bar 21 and a second sub-bus bar 22. And each of the bus bars 20 may include a bus bar overlapping portion 20A in which the first sub-bus bar 21 and the second sub-bus bar 22 are connected to overlap each other.

Each of the first sub-bus bar 21 and the second sub-bus bar 22 may connect the negative electrode terminals 11 and the positive electrode terminals 12 of the battery cells 10. The battery cell 10 connected to the first sub-bus bar 21 may be different from the battery cell 10 connected to the second sub-bus bar 22.

Three battery cells 10 may be arranged between the two battery cells 10 connected to the first sub-bus bar 21. Another three battery cells 10 may be arranged between the two battery cells 10 connected to the second sub-bus bar 22. Each of the bus bars 20 may form two parallel modules by connecting two battery cells 10 in parallel through the bus bar overlapping portion 20A together with a portion of the first sub-bus bar 21 and a portion of the second sub-bus bar 22 and may further connect the two parallel modules in series.

The battery module 100 may further include outer terminals 81 and 82 and terminal access members 30, 40, 50, and 60.

The outer terminals 81 and 82 may include a first outer terminal 81 and a second outer terminal 82 connected to the outside of the battery module 100 and having opposite polarities. If the battery module 100 is used in an electric vehicle, the outer terminals 81 and 82 may divide electric power of the battery module 100 to various components in the electric vehicle, such as a motor, an inverter, a charge system, or an auxiliary electronic device. If the battery module 100 is used as an energy storage device, the outer terminals 81 and 82 may connect the battery module 100 to the inverter and a grid.

The terminal access members 30, 40, 50, and 60 may include a first terminal access member 30, a second terminal access member 40, a third terminal access member 50, and a fourth terminal access member 60. The respective first terminal access member 30 and the second terminal access member 40 may electrically connect the negative electrode terminal 11 of the battery cell 10 and the first outer terminal 81. The respective third terminal access member 50 and the fourth terminal access member 60 may electrically connect the positive electrode terminal 12 of another battery cell 10 and the second outer terminal 82.

Positions of first terminal access member 30 and the second terminal access member 40 may be exchanged with positions of the third terminal access member 50 and the fourth terminal access member 60. The first terminal access member 30 and the second terminal access member 40 may electrically connect the positive electrode terminal 12 of one battery cell 10 and the second outer terminal 82, and the third terminal access member 50 and the fourth terminal access member 60 may electrically connect the negative electrode terminal 11 of another battery cell 10 and the first outer terminal 81.

The first terminal access member 30 and the second terminal access member 40 may electrically connect the first outer terminal 81 and the negative electrode terminals 11 of the four battery cells 10 disposed near the first outer terminal 81. The first terminal access member 30 and the second terminal access member 40 may be disposed on two opposite sides with respect to the negative electrode terminal 11.

The third terminal access member 50 and the fourth terminal access member 60 may electrically connect the second outer terminal 82 and the positive electrode terminals 12 of the four battery cells 10 disposed near the second outer terminal 82. In the example configuration depicted in FIG. 2, the third terminal access member 50 and the fourth terminal access member 60 may be disposed on two opposite sides with respect to the positive electrode terminal 12.

The first terminal access member 30 may include a first-1 sub-access member 31 and a first-2 sub-access member 32. The first terminal access member 30 may include a first terminal access overlapping portion 30A in which the first-1 sub-access member 31 overlaps the first-2 sub-access member 32 to connect the sub-access members 31 and 32 to each other. The first-1 sub-access member 31 and the first-2 sub-access member 32 may electrically connect the negative electrode terminal 11 of the battery cell 10 and the first outer terminal 81.

The second terminal access member 40 may include a second-1 sub-access member 41 and a second-2 sub-access member 42. The second terminal access member 40 may include a second terminal access overlapping portion 40A in which the second-1 sub-access member 41 overlaps the second-2 sub-access member 42 to connect the sub-access members 41 and 42 to each other. The second-1 sub-access member 41 and the second-2 sub-access member 42 may electrically connect the negative electrode terminal 11 of the battery cell 10 and the first outer terminal 81.

The third terminal access member 50 may include a third-1 sub-access member 51 and a third-2 sub-access member 52. The third terminal access member 50 may include a third terminal access overlapping portion 50A in which the third-1 sub-access member 51 overlaps the third-2 sub-access member 52 to connect the sub-access members 51 and 52 to each other. The third-1 sub-access member 51 and the third-2 sub-access member 52 may electrically connect the positive electrode terminal 12 of the battery cell 10 and the second outer terminal 82.

The fourth terminal access member 60 may include a fourth-1 sub-access member 61 and a fourth-2 sub-access member 62. The fourth terminal access member 60 may include a fourth terminal access overlapping portion 60A in which the fourth-1 sub-access member 61 overlaps the fourth-2 sub-access member 62 to connect the sub-access members 61 and 62 to each other. The fourth-1 sub-access member 61 and the fourth-2 sub-access member 62 may electrically connect the positive electrode terminal 12 of the battery cell 10 and the second outer terminal 82.

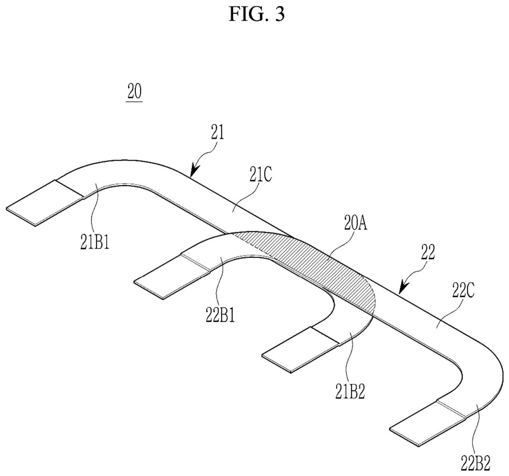

The bus bar 20 and the first to fourth terminal access members 30, 40, 50, and 60 will now be described in detail below with reference to FIG. 3 to FIG. 7. The bus bar 20 and the first to fourth terminal access members 30, 40, 50, and 60 shown in FIG. 3 to FIG. 7 may be applied to the battery module 100 shown in FIG. 1 and FIG. 2 so they will be described together with FIG. 2.

FIG. 3 shows a perspective view on a bus bar according to an embodiment of the present disclosure.

Referring to FIG. 3, the bus bar 20 may include a first sub-bus bar 21 and a second sub-bus bar 22. The bus bar 20 may include a bus bar overlapping portion 20A in which the first sub-bus bar 21 overlaps the second sub-bus bar 22 to be connected (e.g., by welding) to each other.

The first sub-bus bar 21 may include a first sub-first branch 21B1, a first sub-second branch 21B2, and a first sub-connector 21C. A first sub-connector 21C may extend in the direction in which the battery cells 10 are arranged, and the first sub-first branch 21B1 and the first sub-second branch 21B2 may extend from opposite ends of the first sub-connector 21C. End portions of the first sub-first branch 21B1 and first sub-second branch 21B2 may be electrically connected to electrode terminals of battery cells 10. As shown in FIG. 3, the end portions of the first sub-first branch 21B1 and the first sub-second branch 21B2 may have steps.

The second sub-bus bar 22 may include a second sub-first branch 22B1, a second sub-second branch 22B2, and a second sub-connector 22C. The second sub-connector 22C may extend in the direction in which the battery cells 10 are arranged, and the second sub-first branch 22B1 and the second sub-second branch 22B2 may extend from opposite ends of the second sub-connector 22C. End portions of the second sub-first branch 22B1 and the second sub-second branch 22B2 may be electrically connected to the electrode terminals of battery cell s10. As shown in FIG. 3, the end portions of the second sub-first branch 22B1 and the second sub-second branch 22B2 may have steps.

The first sub-first branch 21B1 may be electrically connected to the negative electrode terminal 11 of the battery cell 10, and the first sub-second branch 21B2 may be electrically connected to the positive electrode terminal 12 of another battery cell 10. In some embodiments, three battery cells 10 may be arranged between the battery cell 10 connected to the first sub-first branch 21B1 and the battery cell 10 connected to the first sub-second branch 21B2. Similarly, the second sub-first branch 22B1 may be electrically connected to the negative electrode terminal 11 of the battery cell 10, and the second sub-second branch 22B2 may be electrically connected to the positive electrode terminal 12 of other battery cell 10. And in some embodiments, three battery cells 10 may be arranged between the battery cell 10 connected to the second sub-first branch 22B1 and the battery cell 10 connected to the second sub-second branch 22B2.

The first sub-connector 21C and the second sub-connector 22C may partly overlap each other, and the sub-connectors 21C and 22C may be connected to each other to form a bus bar overlapping portion 20A. The thickness of the bus bar overlapping portion 20A may be about twice the thickness of the first sub-bus bar 21 and twice the thickness of the second sub-bus bar 22. In some embodiments, the thicknesses of first sub-bus bar 21 and the second sub-bus bar 22 may be equal to each other.

The first sub-bus bar 21 may be disposed below the second sub-bus bar 22. In such a configuration, the end portions of the first sub-first branch 21B1 and the first sub-second branch 21B2 may have steps bent upward by the thickness of the first sub-bus bar 21. The end portion of the first sub-first branch 21B1 may be disposed on a negative electrode terminal 11, and the end portion of the first sub-second branch 21B2 may be disposed on a positive electrode terminal 12. The end portions of the second sub-first branch 22B1 and the second sub-second branch 22B2 may have a step bent downward by the thickness of the second sub-bus bar 22. And the end portion of the second sub-first branch 22B1 may be disposed on a negative electrode terminal 11, and the end portion of the second sub-second branch 22B2 may be disposed on a positive electrode terminal 12. As used herein the "upward" direction may represent the direction from the first sub-bus bar 21 toward the second sub-bus bar 22, and the "downward" direction may represent the opposite direction to the upward direction.

As the bus bar overlapping portion 20A is formed by overlapping the first sub-connector 21C and the second sub-connector 22C, components forming the first sub-bus bar 21 and the second sub-bus bar 22 may be disposed on sides (left and right sides in the drawing) of the bus bar overlapping portion 20A. For example, as depicted in FIG. 3, with the bus bar overlapping portion 20A as the center, the first sub-first branch 21B1 and second sub-first branch 22B1 may be disposed on the left, and the first sub-second branch 21B2 and second sub-second branch 22B2 may be disposed on the right.

The first sub-first branch 21B1 and the second sub-first branch 22B1 may be electrically connected to the negative electrode terminals 11 of battery cells 10, and the first sub-second branch 21B2 and the second sub-second branch 22B2 may be electrically connected to the positive electrode terminals 12 of battery cells 10. That is, through the bus bar overlapping portion 20A, the first sub-first branch 21B1 and the second sub-first branch 22B1 may connect the negative electrode terminals 11 of two of the battery cells 10 in parallel to form a parallel module, and the first sub-second branch 21B2 and the second sub-second branch 22B2 may connect the positive electrode terminal 12 of other two of the battery cells 10 in parallel to form another parallel module. The parallel modules configured in this manner may also be coupled in series through the bus bar overlapping portion 20A.

Regarding the bus bar 20, if the battery module 100 is operated, and the current is concentrated (or gathered) to a part where the different parallel modules are coupled in series, that is, the bus bar overlapping portion 20A, the temperature may increase in this part. However, in the present embodiment, a thickness (cross-section) of the bus bar overlapping portion 20A is increased compared to other parts of the bus bar 20 so the increase of temperature at the bus bar 20 including the bus bar overlapping portion 20A may be prevented. In this way, the bus bar overlapping portion 20A for connecting the different parallel modules in series may be electrically connected by overlapping the first sub-bus bar 21 and the second sub-bus bar 22, thereby increasing the cross-section of the portion where the current concentrates without requiring a complex bus bar design, and thereby preventing overheating of the bus bar 20 in advance.

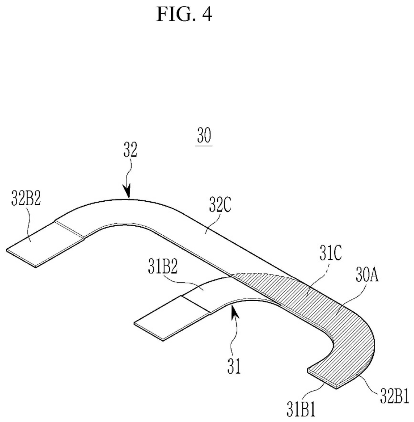

FIG. 4 shows a perspective view on a first terminal access member according to an embodiment of the present disclosure.

Referring to FIG. 4, the first terminal access member 30 may include a first-1 sub-access member 31 and a first-2 sub-access member 32. The first terminal access member 30 may include a first terminal access overlapping portion 30A in which the first-1 sub-access member 31 overlaps the first-2 sub-access member 32, with the sub-access members 31 and 32 connected (e.g., welded) to each other in the overlapping portion 30A.

The first-1 sub-access member 31 may include a first-1-1 sub-access branch 31B1, a first-1-2 sub-access branch 31B2, and a first-1 sub-access connector 31C. The first-1 sub-access connector 31C may extend in the direction in which the battery cells 10 are arranged, and the first-1-1 sub-access branch 31B1 and the first-1-2 sub-access branch 31B2 may extend from ends of the first-1 sub-access connector 31C and may electrically connect the negative electrode terminal 11 of a battery cell 10 and the first outer terminal 81.

Similarly, the first-2 sub-access member 32 may include a first-2-1 sub-access branch 32B1, a first-2-2 sub-access branch 32B2, and a first-2 sub-access connector 32C. The first-2 sub-access connector 32C may extend in the direction in which the battery cells 10 are arranged, and the first-2-1 sub-access branch 32B1 and the first-2-2 sub-access branch 32B2 may extend from the first-2 sub-access connector 32C and may electrically connect the negative electrode terminal 11 of a battery cell 10 and the first outer terminal 81.

The first-1-1 sub-access branch 31B1 may be electrically connected to the first outer terminal 81, and the first-1-2 sub-access branch 31B2 may be electrically connected to a negative electrode terminal 11. The first-1-1 sub-access branch 31B1 may not be disposed on the first outer terminal 81, but may contact a lateral side of the first outer terminal 81 and to thereby be electrically connected to the first outer terminal 81. The first-1-2 sub-access branch 31B2 may be disposed on a negative electrode terminal 11, and an end portion of the first-1-2 sub-access branch 31B2 may have a step, as shown in FIG. 4. As such, the first-1-2 sub-access branch 31B2 may be longer than the first-1-1 sub-access branch 31B1.

The first-2-1 sub-access branch 32B1 may be electrically connected to the first outer terminal 81, and the first-2-2 sub-access branch 32B2 may be electrically connected to a negative electrode terminal 11. The first-2-1 sub-access branch 32B1 may not be disposed on the first outer terminal 81, but may contact a lateral side of the first outer terminal 81 to thereby be electrically connected to the first outer terminal 81. The first-2-2 sub-access branch 32B2 may be disposed on the negative electrode terminal 11, and its end portion may have steps. As such, the first-2-2 sub-access branch 32B2 may be longer than the first-2-1 sub-access branch 32B1.

The first-1 sub-access connector 31C and the first-2 sub-access connector 32C may partially overlap each other, and the first-1-1 sub-access branch 31B1 and the first-2-1 sub-access branch 32B1 may be connected to each other at the first terminal access overlapping portion 30A. Accordingly, the negative electrode terminal 11 of the battery cell 10 and the first outer terminal 81 may be electrically connected to each other through the first terminal access overlapping portion 30A. The first terminal access overlapping portion 30A may be about twice as thick as each of the first-1 sub-access member 31 and the first-2 sub-access member 32. In some embodiments, the thicknesses of the first-1 sub-access member 31 and the first-2 sub-access member 32 may be equal to each other.

The first-1 sub-access member 31 may be disposed under the first-2 sub-access member 32. As shown in FIG. 4, the end portion of the first-1-2 sub-access branch 31B2 may have steps bent upward by the thickness of the first-1 sub-access member 31, and the end portion of the first-2-2 sub-access branch 32B2 may have steps bent downward by the thickness of the first-2 sub-access member 32. Here, the upward direction may be the direction from the first-1 sub-access member 31 toward the first-2 sub-access member 32, and the downward direction is the opposite direction to the upward direction.

In this configuration, as the first terminal access overlapping portion 30A is formed so that the first-1 sub-access connector 31C and the first-2 sub-access connector 32C partly overlap each other and the first-1-1 sub-access branch 31B1 and the first-2-1 sub-access branch 32B1 are connected to each other at the overlapping portion, the cross-section of the first terminal access overlapping portion 30A where current is concentrated may be increased without requiring a complex design. Therefore, an increase of temperature of the first terminal access member 30 may be prevented by using the first terminal access member 30 in the battery module 100.

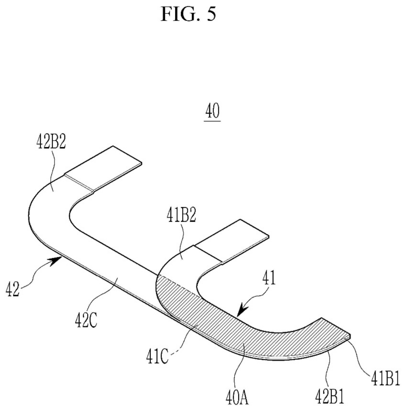

FIG. 5 shows a perspective view on a second terminal access member according to an embodiment of the present disclosure.

Referring to FIG. 5, the second terminal access member 40 may include a second-1 sub-access member 41 and a second-2 sub-access member 42. The second terminal access member 40 may include a second terminal access overlapping portion 40A where the second-1 sub-access member 41 and the second-2 sub-access member 42 overlap and are connected to each other.

The second-1 sub-access member 41 may include a second-1-1 sub-access branch 41B1, a second-1-2 sub-access branch 41B2, and a second-1 sub-access connector 41C. The second-1 sub-access connector 41C may extend in the direction in which the battery cells 10 are arranged. The second-1-1 sub-access branch 41B1 and the second-1-2 sub-access branch 41B2 may extend from the second-1 sub-access connector 41C and may electrically connect the negative electrode terminal 11 of a battery cell 10 and the first outer terminal 81.

The second-2 sub-access member 42 may include a second-2-1 sub-access branch 42B1, a second-2-2 sub-access branch 42B2, and a second-2 sub-access connector 42C. The second-2 sub-access connector 42C may extend in the direction in which the battery cells 10 are arranged, and the second-2-1 sub-access branch 42B1 and the second-2-2 sub-access branch 42B2 may extend from the second-2 sub-access connector 42C and may electrically connect the negative electrode terminal 11 of the battery cell 10 and the first outer terminal 81.

In the present embodiment, the second-1-1 sub-access branch 41B1 may be electrically connected to the first outer terminal 81, and the second-1-2 sub-access branch 41B2 may be electrically connected to the negative electrode terminal 11. The second-1-1 sub-access branch 41B1 may not be disposed on the first outer terminal 81, but may contact a lateral side of the first outer terminal 81 and thereby be electrically connected to the first outer terminal 81. The second-1-2 sub-access branch 41B2 may be disposed on the negative electrode terminal 11, and its end portion may have steps as shown in FIG. 5. As such, the second-1-2 sub-access branch 41B2 may be longer than the second-1-1 sub-access branch 41B1.

The second-2-1 sub-access branch 42B1 may be electrically connected to the first outer terminal 81, and the second-2-2 sub-access branch 42B2 may be electrically connected to the negative electrode terminal 11 of a battery cell 10. The second-2-1 sub-access branch 42B1 may not be disposed on the first outer terminal 81, but may contact a lateral side of the first outer terminal 81 and may thereby be electrically connected to the first outer terminal 81. The second-2-2 sub-access branch 42B2 may be disposed on the negative electrode terminal 11, and an end portion of the second-2-2 sub-access branch 42B2 may have a step as shown in FIG. 5. As such, the second-2-2 sub-access branch 42B2 may be longer than the second-2-1 sub-access branch 42B1.

The second-1 sub-access connector 41C and the second-2 sub-access connector 42C may partially overlap. In particular, the second-1-1 sub-access branch 41B1 and the second-2-1 sub-access branch 42B1 may overlap and be connected to each other in a second terminal access overlapping portion 40A. Accordingly, the negative electrode terminals 11 of the battery cells 10 and the first outer terminal 81 may be electrically connected to each other through the second terminal access overlapping portion 40A. The second terminal access overlapping portion 40A may be twice as thick as each of the second-1 sub-access member 41 and the second-2 sub-access member 42. In some embodiments, the thicknesses of the second-1 sub-access member 41 and the second-2 sub-access member 42 may be equal to each other.

The second-1 sub-access member 41 may be disposed on the second-2 sub-access member 42. Accordingly, as shown in FIG. 5, the end portion of the second-1-2 sub-access branch 41B2 may have steps bent downward by the thickness of the second-1 sub-access member 41, and the end portion of the second-2-2 sub-access branch 42B2 may have steps bent upward by the thickness of the second-2 sub-access member 42. Here, the downward direction is the direction from the second-1 sub-access member 41 toward the second-2 sub-access member 42, and the upward direction is the opposite direction to the downward direction.

In this configuration, as the second terminal access overlapping portion 40A is formed so that the second-1 sub-access connector 41C and the second-2 sub-access connector 42C partly overlap each other and the second-1-1 sub-access branch 41B1 and the second-2-1 sub-access branch 42B1 are connected to each other in the overlapping portion 40A, the cross-sectional thickness of the second terminal access overlapping portion 40A where current is concentrated may be increased without a complex bus bar design. Thus, an increase of temperature at the second terminal access member 40 may be compensated for by using the second terminal access member 40 in the battery module 100.

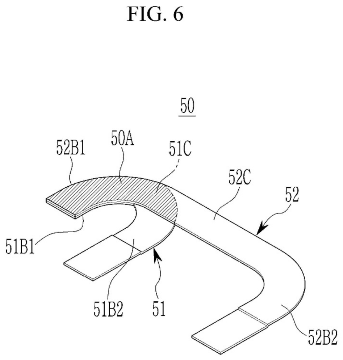

FIG. 6 shows a perspective view on a third terminal access member according to an embodiment of the present disclosure.

Referring to FIG. 6, the third terminal access member 50 may include a third-1 sub-access member 51 and a third-2 sub-access member 52. The third terminal access member 50 may include a third terminal access overlapping portion 50A where the third-1 sub-access member 51 overlaps the third-2 sub-access member 52 and the sub-access members 51 and 52 are connected to each other.

The third-1 sub-access member 51 may include a third-1-1 sub-access branch 51B1, a third-1-2 sub-access branch 51B2, and a third-1 sub-access connector 51C. The third-1 sub-access connector 51C may extend in the direction in which the battery cells 10 are arranged. The third-1-1 sub-access branch 51B1 and the third-1-2 sub-access branch 51B2 may extend from the third-1 sub-access connector 51C and may electrically connect the second outer terminal 82 and the positive electrode terminal 12 of a battery cell 10, respectively.

The third-2 sub-access member 52 may include a third-2-1 sub-access branch 52B1, a third-2-2 sub-access branch 52B2, and a third-2 sub-access connector 52C. The third-2 sub-access connector 52C may extend in the direction in which the battery cells 10 are arranged. The third-2-1 sub-access branch 52B1 and the third-2-2 sub-access branch 52B2 may extend from the third-2 sub-access connector 52C and may electrically connect the second outer terminal 82 and the positive electrode terminal 12 of the battery cell 10, respectively.

The third-1-1 sub-access branch 51B1 may be electrically connected to the second outer terminal 82, and the third-1-2 sub-access branch 51B2 may be electrically connected to positive electrode terminal 12. The third-1-1 sub-access branch 51B1 may not be disposed on the second outer terminal 82, but rather may contact a lateral side of the second outer terminal 82 and thereby be electrically connected to the second outer terminal 82. The third-1-2 sub-access branch 51B2 may be disposed on the positive electrode terminal 12, and ab end portion third-1-2 sub-access branch 51B2 may have a step as shown in FIG. 6. As such, the third-1-2 sub-access branch 51B2 may be longer than the third-1-1 sub-access branch 51B1.

The third-2-1 sub-access branch 52B1 may be electrically connected to the second outer terminal 82, and the third-2-2 sub-access branch 52B2 may be electrically connected to the positive electrode terminal 12. The third-2-1 sub-access branch 52B1 may not be disposed on the second outer terminal 82, but rather may contact a lateral side of the second outer terminal 82 and thereby be electrically connected to the second outer terminal 82. The third-2-2 sub-access branch 52B2 may be disposed on the positive electrode terminal 12, and its end portion may have steps as shown in FIG. 6. As such, the third-2-2 sub-access branch 52B2 may be longer than the third-2-1 sub-access branch 52B1.

The third-1 sub-access connector 51C and the third-2 sub-access connector 52C may partly overlap each other, and the third-1-1 sub-access branch 51B1 and the third-2-1 sub-access branch 52B1 may be connected to each other at such a third terminal access overlapping portion 50A. Accordingly, the positive electrode terminal 12 of the battery cell 10 and the second outer terminal 82 may be electrically connected to each other through the third terminal access overlapping portion 50A. The third terminal access overlapping portion 50A may be twice as thick as each of the third-1 sub-access member 51 and the third-2 sub-access member 52. In some embodiments, the thicknesses of the third-1 sub-access member 51 and the third-2 sub-access member 52 may be equal to each other.

The third-1 sub-access member 51 may be disposed below the third-2 sub-access member 52. Accordingly, as shown in FIG. 6, the end portion of the third-1-2 sub-access branch 51B2 may have steps bent upward by the thickness of the third-1 sub-access member 51, and the end portion of the third-2-2 sub-access branch 52B2 may have steps bent downward by the thickness of the third-2 sub-access member 52. here, the upward direction is the direction from the third-1 sub-access member 51 toward the third-2 sub-access member 52, and the downward direction is the opposite direction to the upward direction.

In such a configuration, as the third terminal access overlapping portion 50A is formed so that the third-1 sub-access connector 51C and the third-2 sub-access connector 52C partly overlap each other and the third-1-1 sub-access branch 51B1 and the third-2-1 sub-access branch 52B1 overlap to be connected to each other, the cross-sectional thickness of the third terminal access overlapping portion 50A where current is concentrated may be increased without requiring a complex bus bar design. Therefore, an increased temperature at the third terminal access member 50 may be prevented by using the third terminal access member 50 to the battery module 100.

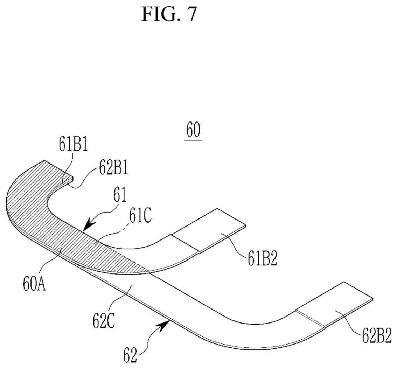

FIG. 7 shows a perspective view on a fourth terminal access member according to an embodiment of the present disclosure.

Referring to FIG. 7, the fourth terminal access member 60 may include a fourth-1 sub-access member 61 and a fourth-2 sub-access member 62. The fourth terminal access member 60 may include a fourth terminal access overlapping portion 60A in which the fourth-1 sub-access member 61 and the fourth-2 sub-access member 62 overlap and are connected to each other.

The fourth-1 sub-access member 61 may include a fourth-1-1 sub-access branch 61B1, a fourth-1-2 sub-access branch 61B2, and a fourth-1 sub-access connector 61C. The fourth-1 sub-access connector 61C may extend in the direction in which the battery cells 10 are arranged. The fourth-1-1 sub-access branch 61B1 and the fourth-1-2 sub-access branch 61B2 may extend from the fourth-1 sub-access connector 61C and may electrically connect the second outer terminal 82 and the positive electrode terminal 12 of the battery cell 10, respectively.

The fourth-2 sub-access member 62 may include a fourth-2-1 sub-access branch 62B1, a fourth-2-2 sub-access branch 62B2, and a fourth-2 sub-access connector 62C. The fourth-2 sub-access connector 62C may extend in the direction in which the battery cells 10 are arranged. The fourth-2-1 sub-access branch 62B1 and the fourth-2-2 sub-access branch 62B2 may extend from the fourth-2 sub-access connector 62C and may electrically connect the second outer terminal 82 and the positive electrode terminal 12 of the battery cell 10, respectively.

The fourth-1-1 sub-access branch 61B1 may be electrically connected to the second outer terminal 82, and the fourth-1-2 sub-access branch 61B2 may be electrically connected to positive electrode terminal 12. The fourth-1-1 sub-access branch 61B1 may not be disposed on the second outer terminal 82, but rather may contact a lateral side of the second outer terminal 82 and thereby be electrically connected to the second outer terminal 82. The fourth-1-2 sub-access branch 61B2 may be disposed on the positive electrode terminal 12, and an end portion of the fourth-1-2 sub-access branch 61B2 may a have step as shown in FIG. 7. As such, the fourth-1-2 sub-access branch 61B2 may be longer than the fourth-1-1 sub-access branch 61B1.

The fourth-2-1 sub-access branch 62B1 may be electrically connected to the second outer terminal 82, and the fourth-2-2 sub-access branch 62B2 may be electrically connected to the positive electrode terminal 12. The fourth-2-1 sub-access branch 62B1 may not be disposed on the second outer terminal 82, but rather may contact a lateral side of the second outer terminal 82 and thereby be electrically connected to the second outer terminal 82. The fourth-2-2 sub-access branch 62B2 may be disposed on the positive electrode terminal 12, and an end portion of the fourth-2-2 sub-access branch 62B2 may have a step as shown in FIG. 7. Accordingly, the fourth-2-2 sub-access branch 62B2 may be longer than the fourth-2-1 sub-access branch 61B1.

The fourth-1 sub-access connector 61C and the fourth-2 sub-access connector 62C may partly overlap, and the fourth-1-1 sub-access branch 61B1 and the fourth-2-1 sub-access branch 62B1 may connected to each other at a fourth terminal access overlapping portion 60A. Accordingly, the positive electrode terminal 12 of the battery cell 10 and the second outer terminal 82 may be electrically connected to each other through the fourth terminal access overlapping portion 60A. The fourth terminal access overlapping portion 60A may be twice as thick as each of the fourth-1 sub-access member 61 and the fourth-2 sub-access member 62. In some embodiments, the thicknesses of the fourth-1 sub-access member 61 and the fourth-2 sub-access member 62 may be equal to each other.

The fourth-1 sub-access member 61 may be disposed on the fourth-2 sub-access member 62. Accordingly, as shown in FIG. 7, the end portion of the fourth-1-2 sub-access branch 61B2 may have steps bent downward by the thickness of the fourth-1 sub-access member 61, and the end portion of the fourth-2-2 sub-access branch 62B2 may have steps bent upward by the thickness of the fourth-2 sub-access member 62. Here, the downward direction is the from the fourth-1 sub-access member 61 toward the fourth-2 sub-access member 62, and the upward direction is the opposite direction to the downward direction.

In this way, as the fourth terminal access overlapping portion 60A is formed so that the fourth-1 sub-access connector 61C and the fourth-2 sub-access connector 62C partly overlap each other and the fourth-1-1 sub-access branch 61B1 and the fourth-2-1 sub-access branch 62B1 overlap and are connected to each other, the cross-sectional thickness of the fourth terminal access overlapping portion 60A where current is concentrated may be increased without requiring a complex bus bar design. Thus, an increase of temperature at the fourth terminal access member 60 may be prevented by using the fourth terminal access member 60 in the battery module 100.

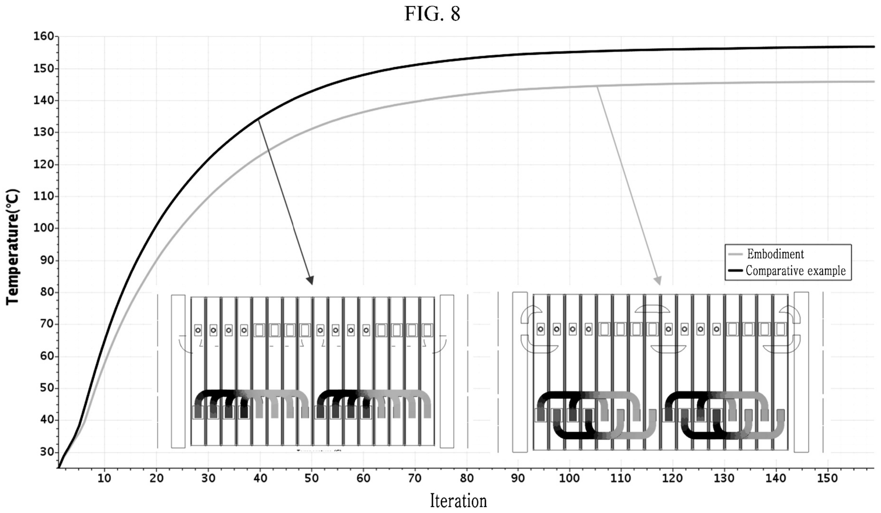

Changes of temperatures of a battery module according to an embodiment of the present disclosure and a battery module according to a comparative example will now be described with reference to FIG. 8 to FIG. 10. FIG. 8 to FIG. 10 show changes of temperatures of a battery module according to an embodiment of the present disclosure and a battery module according to a comparative example.

Referring to FIG. 8 to FIG. 10, in the battery module according to a comparative example, the cross-sectional thickness of the part where the current of the bus bar is concentrated is not different from the rest of the bus bar. That is, the bus bar according to a comparative example has an overall uniform thickness.

FIG. 8 shows the temperature change of the bus bar with respect to the number of stabilized iterations of the battery module according to the embodiment and the battery module according to a comparative example.

Referring to FIG. 8, it can be seen that as the number of iterations increases, the temperature of the bus bar increases, and when the number of iterations reaches 90, the temperature of the bus bar tends to become stable. It can also be seen that the temperature of the bus bar in the battery module according to an embodiment is stabilized at about 140 degrees, whereas the temperature of the bus bar in the battery module according to a comparative example is stabilized at about 150 degrees. That is, it can be seen that the stabilization temperature of the bus bar of the battery module according to an embodiment of the present disclosure is lower than the stabilization temperature of the bus bar of the battery module according to a comparative example.

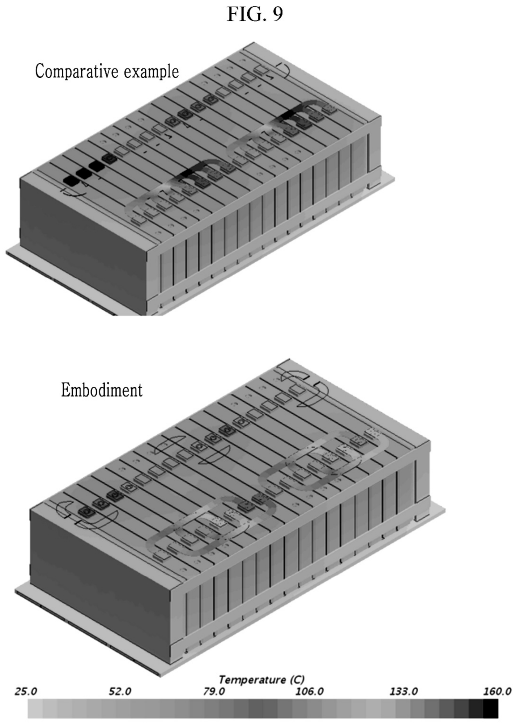

FIG. 9 demonstrates the temperature of the electrode terminal of the battery cell when the temperature of the bus bar is stabilized as indicated in FIG. 8, and is a result of arbitrarily removing a part of the bus bar.

Referring to FIG. 9, the temperature of the electrode terminal where the current enters tends to be high. In the case of the battery module according to a comparative example, the temperature of the electrode terminal is found to be close to about 160 degrees at the maximum. On the other hand, in the case of the battery module according to an embodiment, the temperature of the electrode terminal is found to be close to about 152 degrees at the maximum. That is, it can be seen that the temperature of the electrode terminal of the battery module according to an embodiment of the present disclosure is lower than the temperature of the electrode terminal of the battery module according to a comparative example.

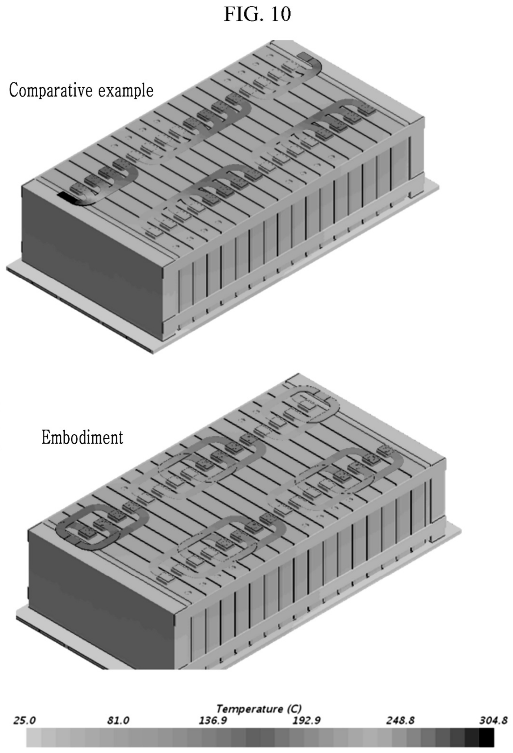

FIG. 10 shows the temperatures of the bus bar and terminal access members in a stabilized state of the battery module according to an embodiment and the battery module according to a comparative example.

Referring to FIG. 10, the stabilized temperature of the bus bar of the battery module according to an embodiment is found to be close to a maximum of about 144 degrees, whereas the stabilized temperature of the bus bar of the battery module according to a comparative example is found to be close to a maximum of about 152 degrees. That is, it can be seen that the stabilized temperature of the bus bar of the battery module according to an embodiment of the present disclosure is lower than the stabilized temperature of the bus bar of the battery module according to a comparative example. The temperature of the terminal access member of the battery module according to an embodiment is found to be close to a maximum of about 192 degrees, whereas the temperature of the terminal access member of the battery module according to a comparative example is found to be close to a maximum of about 304 degrees. That is, it can be seen that the temperature of the terminal access member of the battery module according to an embodiment of the present disclosure is lower than the temperature of the terminal access member of the battery module according to a comparative example.

While this disclosure has been described in connection with what is presently considered to be practical embodiments, it is to be understood that the disclosure is not limited to the disclosed embodiments. Rather the disclosure covers various modifications and equivalent arrangements.

### DESCRIPTION OF SYMBOLS

| | | | |
|---|---|---|---|
| 100: | battery module | 10: | battery cell |
| 20: | bus bar | 20A: | bus bar overlapping portion |
| 21: | first sub-bus bar | 22: | second sub-bus bar |
| 30: | first terminal access member | 30A: | first terminal access overlapping portion |
| 31: | first-1 sub-access member | 32: | first-2 sub-access member |
| 40: | second terminal access member portion | 40A: | second terminal access overlapping |
| 41: | second-1 sub-access member | 42: | second-2 sub-access member |
| 50: | third terminal access member | 50A: | third terminal access overlapping portion |
| 51: | third-1 sub-access member | 52: | third-2 sub-access member |
| 60: | fourth terminal access member portion | 60A: | fourth terminal access overlapping |
| 61: | fourth-1 sub-access member | 62: | fourth-2 sub-access member |
| 81: | first outer terminal | 82: | second outer terminal |

## Claims

1. A battery module (100) comprising:
battery cells (10); and
a bus bar (20) connecting some of the battery cells in parallel to form parallel modules, and connecting in series the parallel modules differing from each other,
wherein the bus bar comprises:
a first sub-bus bar (21) electrically connecting a first battery cell of the battery cells and a second battery cell of the battery cells, and
a second sub-bus bar (22) electrically connecting a third battery cell of the battery cells and a fourth battery cell of the battery cells,
wherein a bus bar overlapping portion (20A) is formed where the first sub-bus bar (21) overlaps and connects to the second sub-bus bar (22), and
wherein a thickness of the bus bar overlapping portion (20A) is thicker than a thickness of the first sub-bus bar (21), and the thickness of the bus bar overlapping portion (20A) is thicker than a thickness of the second sub-bus bar (22).

2. The battery module as claimed in claim 1, wherein the bus bar overlapping portion (20A) is twice as thick as the first sub-bus bar (21), and the bus bar overlapping portion (20A) is twice as thick as the second sub-bus bar (22).

3. The battery module as claimed in claim 1 or claim 2, wherein the first sub-bus bar (21) comprises:
a first sub-connector (21C) extending in a direction in which the battery cells are arranged; and
a first sub-first branch (21B1) and a first sub-second branch (21B2) extending from two opposite ends of the first sub-connector (21C),
wherein the first sub-first branch (21B1) is electrically connected to a first electrode terminal of one of the first and second battery cells, and
wherein the first sub-second branch (21B2) is electrically connected to a second electrode terminal of the other of the first and second battery cells.

4. The battery module as claimed in claim 3, wherein the second sub-bus bar (22) comprises:
a second sub-connector (22C) extending in the direction in which the battery cells are arranged; and
a second sub-first branch (22B1) and a second sub-second branch (22B2) extending from two opposite ends of the second sub-connector (22),
wherein the second sub-first branch (22B1) is electrically connected to a first electrode terminal of one of the third and fourth battery cells, and
wherein the second sub-second branch (22B2) is electrically connected to a second electrode terminal of the other of the third and fourth battery cells.

5. The battery module as claimed in claim 4, wherein three battery cells are arranged between the first sub-first branch (21B1) and the first sub-second branch (21B2), and
wherein three battery cells are arranged between the second sub-first branch (22B1) and the second sub-second branch (22B2).

6. The battery module as claimed in any one of claims 1 to 5, further comprising:
a first outer terminal (81);
a first terminal access member (30) electrically connecting the first outer terminal (81) to a fifth battery cell of the battery cells and a sixth battery cell of the battery cells; and
a second terminal access member (40) electrically connecting the first outer terminal (81) to a seventh battery cell of the battery cells and an eighth battery cell of the battery cells.

7. The battery module as claimed in claim 6, wherein the first terminal access member (30) comprises:
a first-1 sub-access member (31) electrically connecting a first electrode terminal of one of the fifth and sixth battery cells and the first outer terminal (81); and
a first-2 sub-access member (32) electrically connecting a first electrode terminal of the other of the fifth and sixth battery cells and the first outer terminal (81),
wherein a first terminal access overlapping portion (30A) is formed where the first-1 sub-access member overlaps (31) and is connected to the first-2 sub-access member (32), and
wherein a thickness of the first terminal access overlapping portion (30A) is greater than a thickness of the first-1 sub-access member (31), and the thickness of the first terminal access overlapping portion (30A) is greater than a thickness of the first-2 sub-access member (32).

8. The battery module as claimed in claim 7, wherein the first terminal access overlapping portion (30A) is twice as thick as the first-1 sub-access member (31), and the first terminal access overlapping portion (30A) is twice as thick as the first-2 sub-access member (32).

9. The battery module as claimed in claim 7, wherein the second terminal access member (40) comprises:
a second-1 sub-access member (41) electrically connecting a first electrode terminal of one of the seventh and eighth battery cells and the first outer terminal (81); and
a second-2 sub-access member (42) electrically connecting a first electrode terminal of the other of the seventh and eighth battery cells and the first outer terminal (81),
wherein a second terminal access overlapping portion (40A) is formed where the second-1 sub-access member (41) overlaps and connects to the second-2 sub-access member (42), and
wherein a thickness of the second terminal access overlapping portion (40A) is greater than a thickness of the second-1 sub-access member (41), and the thickness of the second terminal access overlapping portion (40A) is greater than a thickness of the second-2 sub-access member (42).

10. The battery module as claimed in claim 9, wherein the second terminal access overlapping portion (40B) is twice as thick as the second-1 sub-access member (41), and the second terminal access overlapping portion (40A) is twice as thick as the second-2 sub-access member (42).

11. The battery module as claimed in any one of claims 6 to 10, further comprising:
a second outer terminal (82);
a third terminal access member (50) electrically connecting the second outer terminal (82) to a ninth battery cell of the battery cells and a tenth battery cell of the battery cells; and
a fourth terminal access member (60) electrically connecting the second outer terminal (82) to an eleventh battery cell of the battery cells and a twelfth battery cell of the battery cells.

12. The battery module as claimed in claim 11, wherein the third terminal access member (50) comprises:
a third-1 sub-access member (51) electrically connecting a second electrode terminal of one of the ninth and tenth battery cells and the second outer terminal (82); and
a third-2 sub-access member (52) electrically connecting a second electrode terminal of the other of the ninth and tenth battery cells and the second outer terminal (82),
wherein a third terminal access overlapping portion (50A) is formed where the third-1 sub-access member (51) overlaps and connects to the third-2 sub-access member (52), and
wherein a thickness of the third terminal access overlapping portion (50A) is greater than a thickness of the third-1 sub-access member (51), and the thickness of the third terminal access overlapping portion (50A) is greater than a thickness of the third-2 sub-access member (52).

13. The battery module as claimed in claim 12, wherein the third terminal access overlapping portion (50A) is twice as thick as the third-1 sub-access member (51), and the third terminal access overlapping portion (50A) is twice as thick as the third-2 sub-access member (52).

14. The battery module as claimed in claim 12 or claim 13, wherein the fourth terminal access member (60) comprises:
a fourth-1 sub-access member (61) electrically connecting a second electrode terminal of one of the eleventh and twelfth battery cells and the second outer terminal (82); and
a fourth-2 sub-access member (62) electrically connecting a second electrode terminal of the other of the eleventh and twelfth battery cells and the second outer terminal (82),
wherein a fourth terminal access overlapping portion (60A) is formed where the fourth-1 sub-access member (61) overlaps and connects to the fourth-2 sub-access member (62), and
wherein a thickness of the fourth terminal access overlapping portion (60A) is greater than a thickness of the fourth-1 sub-access member (61), and the thickness of the fourth terminal access overlapping portion (60A) is greater than a thickness of the fourth-2 sub-access member (62).

15. The battery module as claimed in claim 14, wherein the fourth terminal access overlapping portion (60A) is twice as thick as the fourth-1 sub-access member (61), and the fourth terminal access overlapping portion (60A) is twice as thick as the fourth-2 sub-access member (62).

16. The battery module as claimed in claim 1, wherein the battery cells (10) are prismatic battery cells.
